(19) Europäisches Patentamt
European Patent Office
Office européen des brevets

(11) **EP 4 299 034 A1**

(12) **EUROPEAN PATENT APPLICATION**

(43) Date of publication:
**03.01.2024 Bulletin 2024/01**

(51) International Patent Classification (IPC):
**A61C 17/22** (2006.01)     **A61C 17/34** (2006.01)

(21) Application number: **22198459.4**

(52) Cooperative Patent Classification (CPC):
**A61C 17/228; A61C 17/349**

(22) Date of filing: **28.09.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.06.2022 US 202263356160 P**

(71) Applicant: **Koninklijke Philips N.V.**
**5656 AG Eindhoven (NL)**

(72) Inventors:
• **WILLIAMS, Kayleigh Karina**
**Eindhoven (NL)**
• **ADRIAENSEN, Guido Antonius Theodorus**
**Eindhoven (NL)**

(74) Representative: **Philips Intellectual Property & Standards**
**High Tech Campus 52**
**5656 AG Eindhoven (NL)**

(54) **FORCE-CONTROLLED CLAMPING MECHANISMS FOR ORAL CARE DEVICES**

(57) The present disclosure relates to oral care devices and force-controlled mechanisms used in such oral care devices. For example, the oral care devices of the present disclosure may be a full or partial mouthpiece, or a multi-surface brush head, and can include one or more brushing blocks having a constant-force spring assembly. Each of these brushing blocks may include one or more sets of cleaning elements that contact the portions of the subject's mouth (e.g., teeth, gums, etc.) and provide mechanical cleaning functionality when the device is moved.

FIG. 1

**Description**

FIELD OF THE INVENTION

The present disclosure is directed generally to force-controlled mechanisms and oral care devices, and more specifically to oral care devices that incorporate such force-controlled mechanisms.

BACKGROUND OF THE INVENTION

Brushing mouthpieces are an alternative to more conventional manual and/or electronic toothbrushes, which provide cleaning for only a small region of the mouth at a time and require the subject to move the brush head to cover all regions of the mouth. In contrast, brushing mouthpieces have the potential to shorten a subject's oral care routine and with less dependence upon subject behavior than conventional toothbrushes. However, providing oral care devices that exhibit effective cleaning functionality despite large variations in jaw / teeth sizes between subjects remains a significant challenge.

SUMMARY OF THE INVENTION

According to an embodiment of the present disclosure, a force-controlled clamping mechanism for an oral care device is provided. The force-controlled clamping mechanism can comprise: a first projection having a first set of cleaning elements attached to a sidewall of the first projection; a second projection having a second set of cleaning elements attached to a sidewall of the second projection, wherein the sidewall of the first projection opposes the sidewall of the second projection such that the first set of cleaning elements extend from the sidewall of the first projection towards the sidewall of the second projection and the second set of cleaning elements extend from the sidewall of the second projection towards the sidewall of the first projection; and a spring system connected to the first projection and the second projection, the spring system being configured to enable the sidewall of the first projection and the sidewall of the second projection to move towards and/or away from one another.

In an aspect, the force-controlled clamping mechanism can be configured to receive a foreign object between the sidewall of the first projection and the sidewall of the second projection such that the first and second sets of cleaning elements contact the foreign object.

In an aspect, receiving the foreign object between the first and second projections can cause a displacement of the first and second set of cleaning elements.

In an aspect, the displacement of the first and second set of cleaning elements can create a force on the spring system such that the first and second projections move towards and/or away from one another.

In an aspect, the sidewall of the first projection and the sidewall of the second projection are substantially parallel.

In an aspect, the spring system can be configured to enable the sidewall of the first projection and the sidewall of the second projection to move towards and/or away from one another while the sidewall of the first projection remains substantially parallel with the sidewall of the second projection.

In an aspect, the force-controlled clamping mechanism can have a clamping value (C) of between 30% and 70%, where

$$C = \left(BL - \frac{w - T_w}{2}\right) * \frac{1}{BL}$$

, $BL$ is the length of the first and second set of cleaning elements, w is the distance between the sidewall of the first projection and the sidewall of the second projection, and $T_w$ is the thickness of the foreign object.

In an aspect, the spring system can comprise one or more elastic constant-force mechanisms.

In an aspect, the elastic constant-force mechanisms can also be bistable mechanisms.

In an aspect, the spring system comprises one or more constant-force coil springs.

According to another embodiment of the present disclosure, a force-controlled toothbrushing block is provided. The force-controlled toothbrushing block can comprise: a first projection having a first set of cleaning elements attached to a sidewall of the first projection; a second projection having a second set of cleaning elements attached to a sidewall of the second projection, wherein the sidewall of the first projection opposes the sidewall of the second projection such that the first set of cleaning elements extend from the sidewall of the first projection towards the sidewall of the second projection and the second set of cleaning elements extend from the sidewall of the second projection towards the sidewall of the first projection; a block backing structure; and a spring system connecting the first projection and the second projection to the block backing structure, the spring system being configured to enable the sidewall of the first projection and the sidewall of the second projection to move towards and/or away from one another.

In an aspect, the force-controlled toothbrushing block can be configured to receive one or more teeth between the sidewall of the first projection and the sidewall of the second projection such that the first and second sets of cleaning elements contact the one or more teeth, wherein receiving the one or more teeth causes a displacement of the first and second sets of cleaning elements such that a force is applied to the spring system causing the sidewall of the first projection and the sidewall of the second projection to move towards and/or away from one another, and wherein the sidewall of the first projection and the sidewall of the second projection remain substantially parallel.

According to another embodiment of the present disclosure, an oral care device is provided. The oral care device can comprise: at least one force-controlled toothbrushing block secured to a flexible mouthpiece body, the flexible mouthpiece body being configured to receive at least a region of a subject's set of teeth when the flexible mouthpiece body is inserted into the subject's mouth. In an aspect, each force-controlled toothbrushing block can include: a first projection having a first set of cleaning elements attached to a sidewall of the first projection; a second projection having a second set of cleaning elements attached to a sidewall of the second projection, wherein the sidewall of the first projection opposes the sidewall of the second projection such that the first set of cleaning elements extend from the sidewall of the first projection towards the sidewall of the second projection and the second set of cleaning elements extend from the sidewall of the second projection towards the sidewall of the first projection; a block backing structure; and a spring system connecting the first projection and the second projection to the block backing structure, the spring system being configured to enable the sidewall of the first projection and the sidewall of the second projection to move towards and/or away from one another.

In an aspect, the oral care device can include two or more force-controlled toothbrushing blocks that are secured to the flexible mouthpiece body.

In an aspect, each force-controlled toothbrushing block can be configured to receive one or more teeth between the sidewall of the first projection and the sidewall of the second projection such that the first and second sets of cleaning elements contact the one or more teeth, the one or more teeth being from the region of a subject's set of teeth received by the flexible mouthpiece body. In an aspect, for each force-controlled toothbrushing block: receiving the one or more teeth from the region of a subject's set of teeth causes a displacement of the first and second sets of cleaning elements such that a force is applied to the spring system causing the sidewall of the first projection and the sidewall of the second projection to move towards and/or away from one another, and the sidewall of the first projection and the sidewall of the second projection remain substantially parallel.

These and other aspects of the various embodiments will be apparent from and elucidated with reference to the embodiment(s) described hereinafter.

BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the various embodiments.

FIG. 1 is a diagram illustrating a force-controlled mechanism for toothbrushing according to aspects of the present disclosure.

FIG. 2 is a diagram illustrating a conventional multi-headed toothbrushing mechanism.

FIG. 3 is a diagram illustrating a force-controlled mechanism with angled cleaning elements according to aspects of the present disclosure.

FIG. 4 is a diagram illustrating a force-controlled mechanism with angled sidewalls according to aspects of the present disclosure.

FIG. 5 is a diagram illustrating a force-controlled block for brushing according to aspects of the present disclosure.

FIG. 6 is a diagram illustrating a force-controlled block for brushing with extended projections according to aspects of the present disclosure.

FIG. 7 is a diagram illustrating the clamping amount of a force-controlled mechanism determined according to aspects of the present disclosure.

FIG. 8 is a bubble chart illustrating the cleaning performance of certain simulations according to aspects of the present disclosure.

FIG. 9 is a diagram illustrating a top view of a region of a subject's mouth and the motion of a single force-controlled block along said region according to aspects of the present disclosure.

FIG. 10 is a graph illustrating the spring system elongation when moved along the path identified in FIG. 9.

FIG. 11 is a diagram illustrating a side view of one embodiment of a force-controlled block according to aspects of the present disclosure.

FIG. 12 is a diagram illustrating a cross-section of FIG. 11 taken along line D.

FIG. 13A is a diagram illustrating the deformation that a constant-force mechanism may undergo when used in a spring system according to the present disclosure.

FIG. 13B is a graph illustrating the reaction force of the constant-force mechanism of FIG. 13A as it undergoes deformation.

FIGS. 14A and 14B are diagrams illustrating the relative movement of the projections of a force-controlled block according to aspects of the present disclosure.

FIG. 15A is a diagram illustrating a bistable constant-force mechanism according to aspects of the present disclosure.

FIG. 15B is a graph illustrating the force of the bistable mechanism of FIG. 15A as it undergoes elastic deformation.

FIGS. 16A, 16B, and 16C are diagrams illustrating coil spring-type constant-force mechanisms in different arrangements according to aspects of the present disclosure.

FIG. 17 is a diagram of a force-controlled block having a coil spring-type constant-force mechanism according to aspects of the present disclosure.

DETAILED DESCRIPTION OF THE EMBODIMENTS

The present disclosure relates to oral care devices. More specifically, the present disclosure relates to force-controlled mechanisms used in brushing blocks of an oral care device. In embodiments, the oral care device can include a full mouthpiece, a partial mouthpiece, a multi-surface toothbrush, and the like. As described herein, an oral care device can include one or more brushing blocks attached to a flexible mouthpiece body that can receive a region of the subject's mouth. Each of these brushing blocks provide a set of cleaning elements that contact the region of the subject's mouth and provide mechanical cleaning functionality when the device moves along the subject's teeth. As such, the cleaning elements of each brushing block must reach a sufficient portion of the surface area to be cleaned. However, if the cleaning elements are too close to the surface area to be cleaned, then effective cleaning cannot be obtained. Thus, given the variability in tooth width between different subjects and even within a single subject's mouth, the design of the oral care device and individual brushing blocks remains a significant challenge. According to the present disclosure, the oral care devices and brushing blocks are adapted with a force-controlled mechanism to deliver effective cleaning functionality to a wide range of subjects despite the variability in the dimensions of the subjects' oral features.

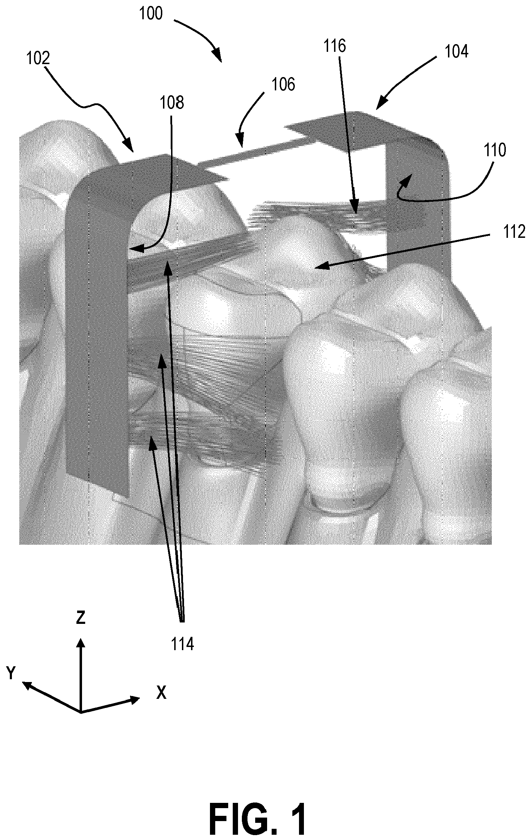

Turning to FIG. 1, an exemplary embodiment of a force-controlled mechanism 100 is illustrated on an XYZ coordinate system according to certain aspects of the present disclosure. As shown, the force-controlled mechanism 100 can include a first projection 102 and an opposing second projection 104 connected by a spring system 106. Each projection 102, 104 can include a sidewall 108, 110 respectively, that oppose one another. In embodiments, the sidewalls 108, 110 are substantially parallel with one another, as shown in FIG. 1.

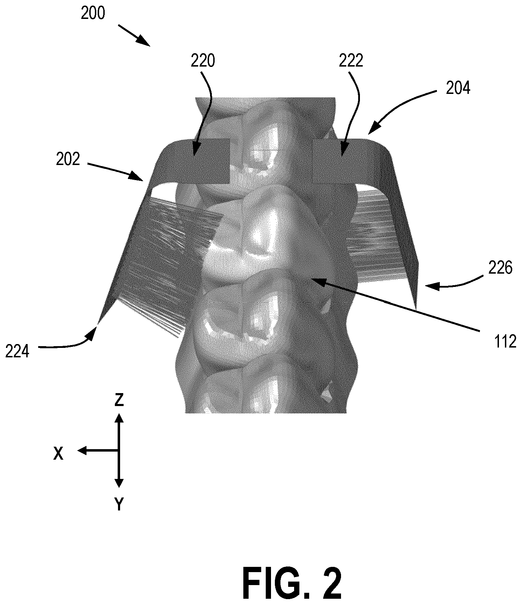

In an aspect, the projections 102, 104 may be formed from a rigid and/or semi-rigid material that resists flexing away from the teeth. Put another way, the sidewalls 108, 110 of the projections 102, 104 are preferably the same distance or substantially the same distance apart in the x-axis along the entire z-axis length of the sidewall 108, 110. In contrast, with reference to FIG. 2, the projections 202, 204 of a conventional device 200 are closer together in the x-axis at the first ends 220, 222, and further apart in the x-axis at the second ends 224, 226.

In embodiments, each projection 102, 104 can include one or more sets of cleaning elements 114, 116 attached to and disposed along the sidewall 108, 110 of the corresponding projection 102, 104. For example, the one or more sets of cleaning elements 114 attached to the sidewall 108 of the first projection 102 may extend toward a sidewall 110 of the second projection, while the one or more sets of cleaning elements 116 attached to the sidewall 110 of the second projection 104 may extend toward a sidewall 108 of the first projection 102.

In embodiments, the cleaning elements 114, 116 can include, but are not limited to, bristles. In other embodiments, the cleaning elements 114, 116 can comprise silicone pillars, woven textile, and the like. In still further embodiments, the cleaning elements 114, 116 can include a combination of bristles, pillars, textiles, and the like.

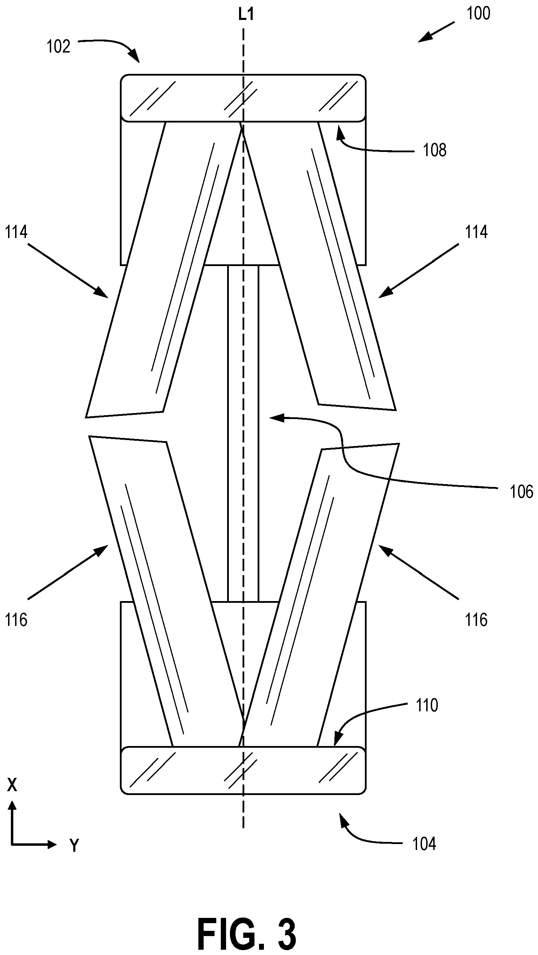

Although the sets of cleaning elements 114, 116 are depicted in at least FIG. 1 as extending perpendicularly from the sidewalls 108, 110 of the projections 102, 104, it is contemplated that one or more of the sets of cleaning elements 114, 116 do not extend from the corresponding sidewall 108, 110 toward the opposition sidewall 108, 110 at a 90° angle. Put another way, one or more sets of cleaning elements 114, 116 can extend from a corresponding sidewall 108, 110 of a corresponding projection 102, 104 towards an opposing sidewall 108, 110 of an opposing projection 102, 104 at an angle. For example, as shown in FIG. 3, the force-controlled mechanism 100 has a center line L1 that bisects the first and second projections 102, 104, but has multiple sets of cleaning elements 114, 116 extending from a corresponding sidewall 108, 110 toward the opposing projection 102, 104 at an angle. In embodiments, the sets of cleaning elements 114, 116 may be angled in different planes and to different degrees.

In an aspect, the region between the sidewalls 108, 110 of the first and second projections 102, 104 can be configured to receive a foreign object such that the different sets of cleaning elements 114, 116 contact the foreign object. In embodiments, the foreign object can be at least a region of a subject's set of teeth 112. More specifically, the foreign object can include one or more of the subject's teeth. In further embodiments, the foreign object can include the subject's gums or a portion thereof.

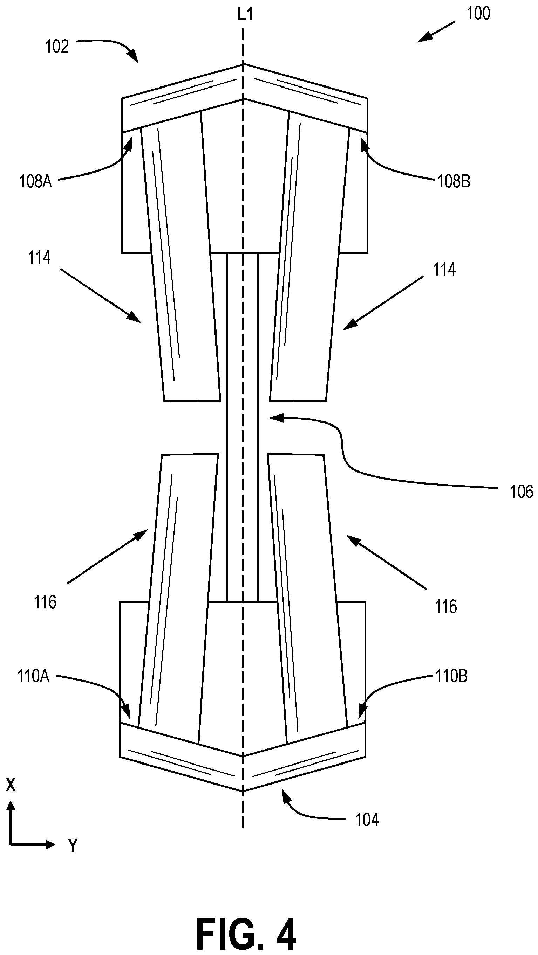

In embodiments, the sidewall 108 and/or the sidewall 110 of the first and second projections 102, 104 respectively may be flat, as illustrated in FIGS. 1-3. In further embodiments, the sidewall 108 and/or the sidewall 110 may be curved or angled. For example, as shown in FIG. 4, the first projection 102 includes sidewalls 108A, 108B having cleaning elements 114 while the second projection 104 includes sidewalls 110A, 110B having cleaning elements 116. In an aspect, regardless of the shape of the projections 102, 104, the faces 108, 110 may oriented vertically (i.e., without rotation as shown in FIG. 2) and/or maintain their relative orientation when receiving a subject's teeth 112.

As mentioned above, the first and second projections 102, 104 of the force-controlled clamping mechanism 100 may be connected via a spring system 106. In embodiments, the spring system 106 can be configured and/or adapted to enable the sidewalls 102, 104 of the first and second projections 102, 104 to move towards and/or away from one another. In specific embodiments, the spring system 106 is further configured and/or adapted to enable the non-rotational movement of the first and second projections 102, 104 such that the receiving region of the force-controlled clamping mechanism 100 is able to accommodate differently-sized objects (e.g., teeth 112) while maintaining the relative orientation of the first and second sidewalls 108, 110. In embodiments, the spring system 106 is configured and/or adapted to enable the expansion and contraction of the receiving region of the force-controlled clamping mechanism 100 while the sidewalls 108, 110 remain substantially vertical (i.e., without rotating or tilting towards or away from the received object).

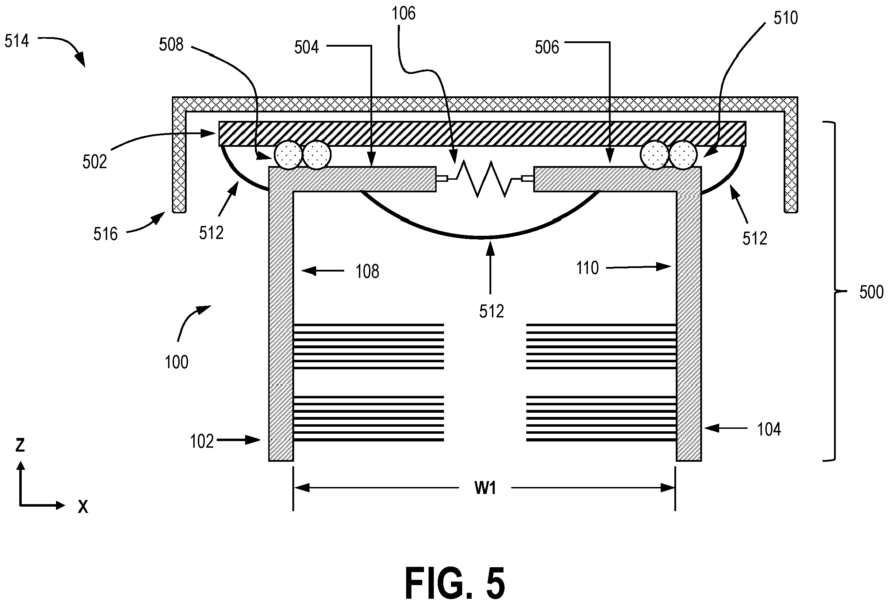

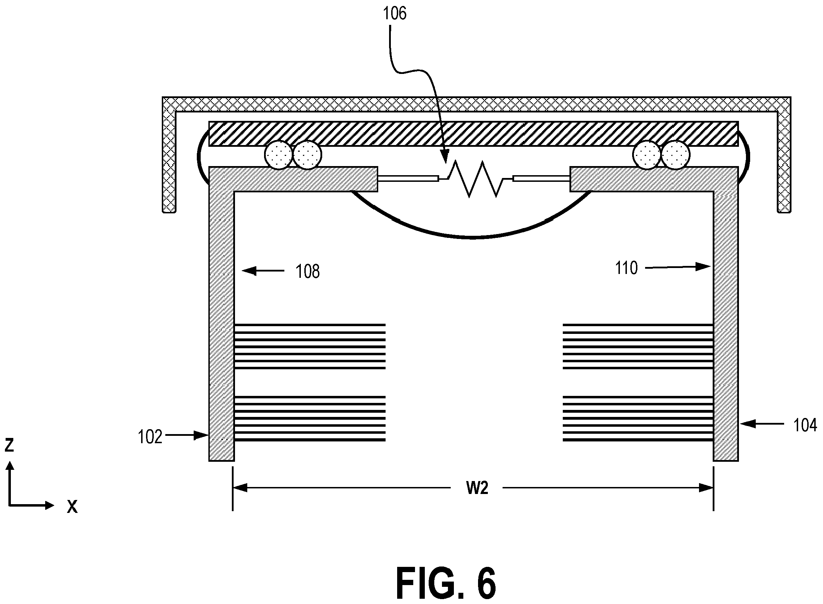

Turning to FIG. 5 and FIG. 6, this non-rotational movement of the force-controlled clamping mechanism 100 is illustrated according to aspects of the present disclosure. As seen in FIG. 5, the force-controlled clamping mechanism 100 is incorporated into a force-controlled brushing block 500 comprising the force-controlled clamping mechanism 100 and a block backing structure 502.

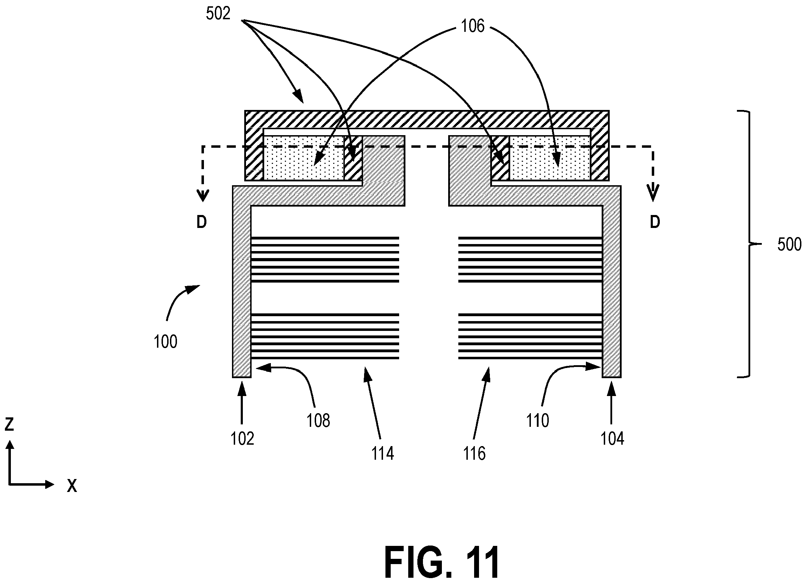

In embodiments, the spring system 106 of the force-controlled clamping mechanism 100 may connect the first and second projections 102, 104 together, for example, at corresponding horizontal portions 504, 506 of the first and second projections 102, 104, respectively. In an aspect, the force-controlled clamping mechanism 100 may then be connected and/or secured to the backing structure 502 via one or more sliding connectors 508, 510. In some embodiments, the first and second projections 102, 104 may not be connected together via the spring system 106. Rather, each projection 102, 104 may be connected to the backing structure 502 via the spring system 106 (as seen in the embodiments illustrated in FIGS. 11, 12, 14A, 14B, 17 and discussed below).

However, in an aspect, the projections 102, 104 enable a translational degree of freedom in the width direction (i.e., x-axis) such that the projections 102, 104 can move in- and outward with respect to the surface of the received object (e.g., the teeth 112). In some embodiments, translation in other directions and rotation of the projections 102, 104 are restricted.

In embodiments, the brushing block 500 can include one or more flexible seals to prevent the build-up of dirt, toothpaste residue, and the like within the block 500. In an aspect, there may be a flexible seal 512 connected between the projections 102, 104 and/or between the projections 102, 104 and the backing structure 502. Alternatively, the brushing block 500 may not include any flexible seals in one or more areas in order to allow cleaning of the blocks 500 by the subject.

In further embodiments, the one or more brushing blocks 500 may be incorporated into an oral care device 514 by securing the brushing blocks 500 to a device body 516 configured to receive at least a region of a subject's set of teeth when the oral care device 514 is inserted into the subject's mouth. In an aspect, the oral care device 514 may include two or more brushing blocks 500. In a further aspect, the device body 516 can allow the subject to move the oral care device 514 along their upper and/or lower mandibles, thereby receiving additional regions of the subject's set of teeth. Moreover, by moving the oral care device 514 within the subject's mouth, the cleaning elements 114, 116 of the brushing blocks 500 will provide cleaning functionality to the subject's oral cavity. In embodiments, the oral care device 514 can be, for example and without limitation, a full mouthpiece, a partial mouthpiece, and/or a multi-headed brush.

As seen in FIG. 5, the sidewalls 108, 110 of the corresponding projections 102, 104 are spaced apart by at least a first width W1, and as seen in FIG. 6, the sidewalls 108, 110 of the corresponding projections 102, 104 are spaced apart by at least a second width W2. For reference, the widths (e.g., W1, W2, etc.) may be measured in an x-axis direction, as labeled in FIGS. 5 and 6. By calibrating the spring system 106, the x-axis translation of the projections 102, 104 can be controlled to accommodate foreign objects (e.g., teeth 112) of varying sizes. Put another way, the force created by the cleaning elements 114, 116 acting on the foreign object (e.g., teeth 112) can be used to control the widths (e.g., W1, W2, etc.) between the first and second projections 102, 104. As a result, effective cleaning functionality may be achieved over a plurality of foreign objects (e.g., teeth 112) of varying sizes.

In embodiments, the displacement of the first and second sets of cleaning elements 114, 116 created as a result of contacting the foreign object 112 is referred to herein as the amount of clamping or the clamping value "C". In an aspect, the clamping value (C) may be expressed as a percentage of the projected cleaning element length. In further aspects, the clamping value (C) may be dependent on the width of the block (i.e., the distance between opposing sidewalls 108, 110), and/or the thickness of the tooth. In still further aspects, the amount of clamping (C) may be equal on both the exterior and interior sides of the foreign object (e.g., the lingual and buccal sides of the tooth 112).

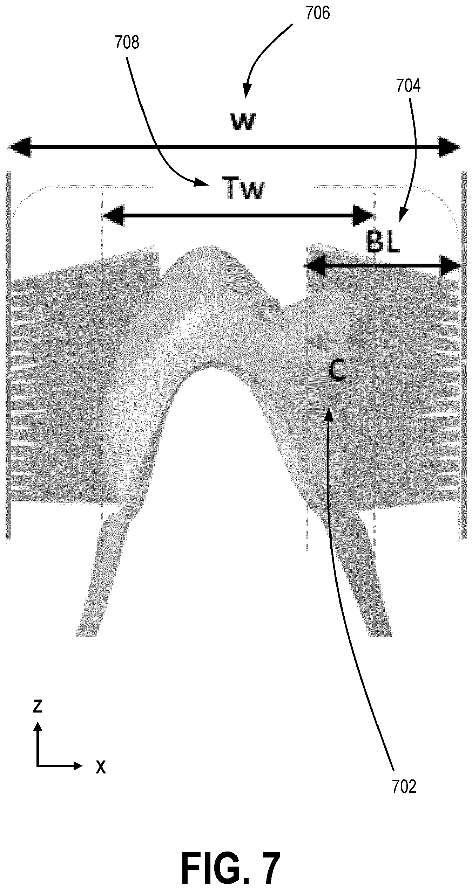

For example, with reference to FIG. 7, the amount of clamping (C) 702 may be expressed as a function of the projected cleaning element length ("BL") 704, the width of the block ("w") 706, and the width of the tooth ("$T_w$") 708. In embodiments, the amount of clamping (C) 702 can be determined according to Equation 1:

$$C = \left(BL - \frac{w - T_w}{2}\right) * \frac{1}{BL}$$

Equation (1)

where C is the amount of clamping, $BL$ is the length of the first or second set of cleaning elements 114, 116, w is the distance between the sidewall 108 of the first projection 102 and the sidewall 110 of the second projection 104, and $T_w$ is the thickness of the foreign object 112.

In embodiments, a target cleaning element length (BL) 704 may be determined given a clamping value (C) 702, a tooth width ($T_w$) 708, and a block width (w) 706 according to Equation 2:

$$BL = \frac{w - T_w}{2 * (1 - C)}$$

Equation (2)

where C is the amount of clamping, $BL$ is the length of the first or second set of cleaning elements 114, 116, w is the distance between the sidewall 108 of the first projection 102 and the sidewall 110 of the second projection 104, and $T_w$ is the thickness of the foreign object 112.

In embodiments, a target block width (w) 706 may be determined given a clamping value (C) 702, a tooth width (Tw) 708, and a cleaning element length (BL) 704 according to Equation 3:

$$w = T_w + 2BL * (1 - C)$$

Equation (3)

where C is the amount of clamping, $BL$ is the length of the first or second set of cleaning elements 114, 116, w is the distance between the sidewall 108 of the first projection 102 and the sidewall 110 of the second projection 104, and $T_w$ is the thickness of the foreign object 112.

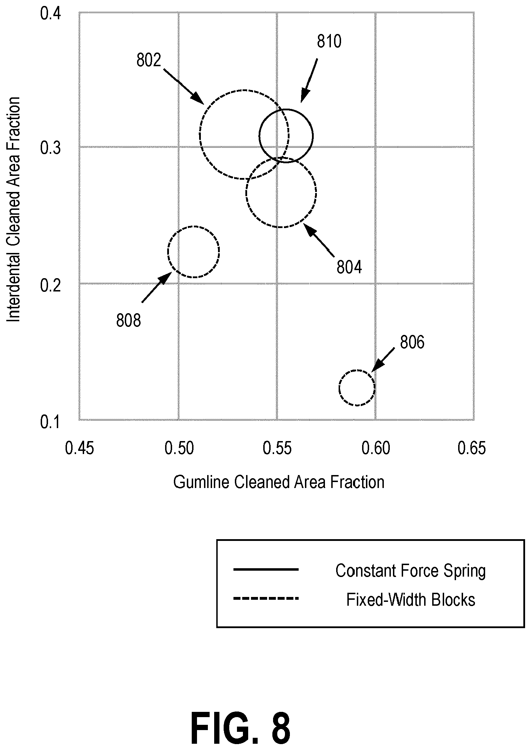

With reference to FIG. 8, the cleaning performance for four simulations using different constant clamping values and a simulation using a constant force spring system 106. As shown, the horizontal axis plots the cleaning along the gumline, the vertical axis plots the interdental cleaning, and the size of each bubble corresponding to the resulting average force in the spring. In particular, illustrated is a first bubble plot 802 for a fixed-width clamping block at C = 57%, a second bubble plot 804 for a fixed-width clamping block at C = 50%, a third bubble plot 806 for a fixed-width clamping block at C = 36%, a fourth bubble plot 808 for a fixed-width clamping block at C = 43%, and bubble plot 810 for a brushing block 100 with a constant-force spring system 106 (i.e., variable width clamping block 100). As shown, the bubble plot 810 was generated using a spring system 106 with a constant force of 0.5 N, but other forces are contemplated.

Looking at the bubble plots 802, 804, 806, 808 for the fixed-width blocks, it can be seen from FIG. 8 that these blocks are very sensitive to the amount of clamping and thus the tooth size. For example, comparing bubble plots 802, 806, decreasing the amount of clamping from C = 57% to C = 36% results in a significantly smaller average force (i.e., smaller bubble size) and the area fraction of the gumline that is cleaned increases, but the area fraction of the interdental surfaces that are cleaned decreases significantly.

Similarly, comparing bubble plots 802, 804, decreasing the amount of clamping from C = 57% to C = 50% results in a smaller average force (i.e., smaller bubble size), the area fraction of the gumline that is cleaned increases, and the area fraction of the interdental surfaces that are cleaned decreases.

In contrast, comparing bubble plots 802, 804, and bubble plot 808, decreasing the amount of clamping from C = 57% or C = 50% to C = 43% results in a smaller average force (i.e., smaller bubble size) without an increase in either interdental cleaning or gumline cleaning. That is, while the simulation 806 at C = 36% saw a decrease in interdental cleaning but an increase in gumline cleaning, the simulation 808 at C = 43% saw a decrease in both interdental and gumline cleaning.

However, when compared with the fixed-width simulations 802, 804, 806, 808, the simulation 810 with the constant-force spring system 106 exhibited the best overall cleaning performance in both the gumline and interdental regions. Further, the average force applied by the block in the simulation 810 is smaller than both the simulations 802, 804 at C = 57% and C = 50%. In particular, the constant-force spring simulation 810 exhibits an interdental cleaning area fraction above 0.3 and a gumline cleaning area fraction about 0.55.

In embodiments, the force-controlled clamping mechanisms 100, the force-controlled toothbrushing blocks 500, and/or the mouthpieces for toothbrushing 514 can provide improved interdental cleaning and/or improved gumline cleaning. In an aspect, the improved interdental cleaning and/or the improved gumline cleaning is provided at lower average applied forces (i.e., without requiring as much force as conventional systems).

In embodiments, the force-controlled clamping mechanisms 100, the force-controlled toothbrushing blocks 500, and/or the mouthpieces for toothbrushing 514 can provide an interdental cleaning performance, measured as the area fraction of the interdental space, of at least about 0.3, including at least about 0.35, at least about 0.4, at least about 0.45, at least about 0.5, at least about 0.55, at least about 0.55, at least about 0.6, at least about 0.65, at least about 0.7, at least about 0.75, at least about 0.8, at least about 0.85, at least about 0.9, at least about 0.95, at least about 0.99, and ranges based on any combination of points thereof.

In embodiments, the force-controlled clamping mechanisms 100, the force-controlled toothbrushing blocks 500, and/or the mouthpieces for toothbrushing 514 can provide a gumline cleaning performance, measured as the area fraction of the gumline space, of at least about 0.5, including at least about 0.55, at least about 0.6, at least about 0.65, at least about 0.7, at least about 0.75, at least about 0.8, at least about 0.85, at least about 0.9, at least about 0.95, at least about 0.99, and ranges based on any combination of points thereof.

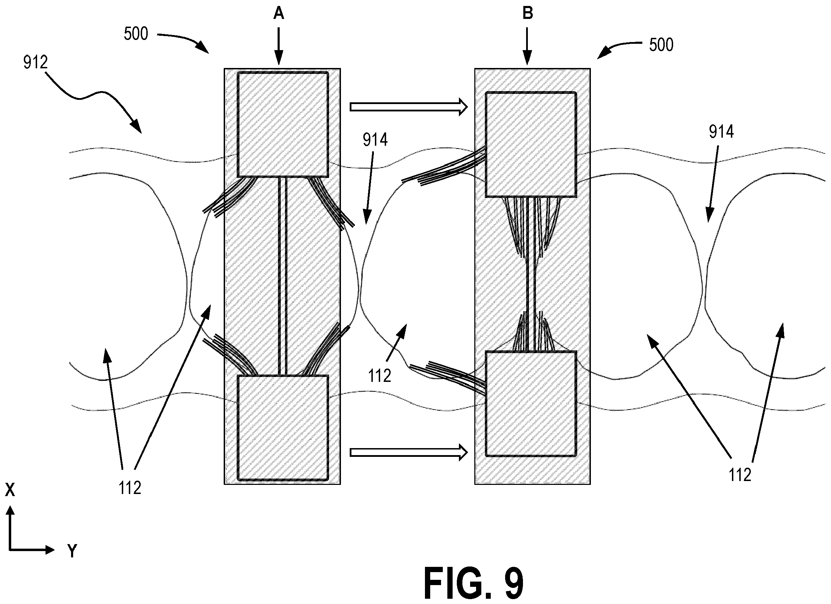

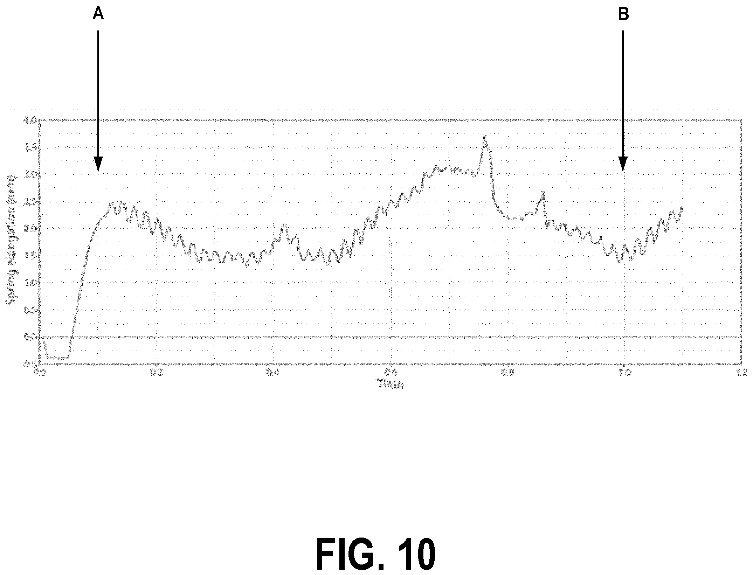

With reference to FIGS. 9 and 10, further aspects of the force-controlled clamping mechanisms 100, the force-controlled toothbrushing blocks 500, and the oral care devices 514 are described. In particular, FIG. 9 illustrates a force-controlled toothbrushing block 500 moving from position A to position B along a region 912 of a subject's mouth, the region 912 including one or more teeth 112 that are received by the block 500 and/or the oral care device 514 (not shown in FIG. 9). FIG. 10 illustrates the elongation of the spring system 106 of the block 500 as the block 500 moves from position A to position B. As shown, the block 500 starts widening when the cleaning elements 114, 116 are maximally bent on the widest part of the tooth 112 and contracts again after the cleaning elements 114, 116 have passed the tooth 112 and are positioned in the next interdental area 914. From FIG. 10, it can also be seen that the length of the spring system 106 has a variation of about 1.5 mm, which corresponds to an effective clamping difference of about 10% of the bristle length for this particular simulation. However, the simulation demonstrates that the constant-force spring system 106 can effectively change the effective amount of clamping (C) to provide improved cleaning in different areas.

In embodiments, the maximum clamping difference provided by the force-controlled clamping mechanisms 100, the force-controlled toothbrushing blocks 500, and/or the oral care devices 514 can be about $\pm 1\%$, about $\pm 2\%$, about $\pm 3\%$, about $\pm 4\%$, about $\pm 5\%$, about $\pm 6\%$, about $\pm 7\%$, about $\pm 8\%$, about $\pm 9\%$, about $\pm 10\%$ about $\pm 15\%$, about $\pm 20\%$, about $\pm 25\%$, about $\pm 30\%$, about $\pm 35\%$, about $\pm 40\%$, about $\pm 45\%$, about $\pm 50\%$, and ranges based on any combination of points thereof.

Turning now to FIG. 11 through FIG. 17, further aspects of the spring systems 106 used in the force-controlled clamping mechanisms 100, the force-controlled toothbrushing blocks 500, and the oral care devices 514 are illustrated and described.

In embodiments, the spring systems 106 of the force-controlled clamping mechanisms 100, the force-controlled toothbrushing blocks 500, and the oral care devices 514 are configured to provide a constant or nearly-constant force within an operational range. In an aspect, one or more components of the spring system 106 may be formed from a polymer composition, a metal, and/or a metal alloy by molding, rapid prototyping, three-dimensional printing, and the like. In embodiments, the spring system 106 or a portion thereof may be integrated into or otherwise attached to the backing structure 502 of the block 500 and/or the device body 516.

In embodiments, the spring system 106 can include an elastic constant force mechanism configured to provide a constant or nearly-constant force within an operational range. For example, with reference to FIG. 11, a force-controlled toothbrushing block 500 having a force-controlled mechanism 100 is illustrated. As shown, the force-controlled mechanism 100 includes the first and second projections 102, 104 and sets of cleaning elements 114, 116 that extend from corresponding sidewalls 108, 110. In an aspect, the first and second projections 102, 104 may be connected via the spring systems 106. As illustrated, the spring systems 106 connect each projection 102, 104 independently to the backing structure 502 of the block 500.

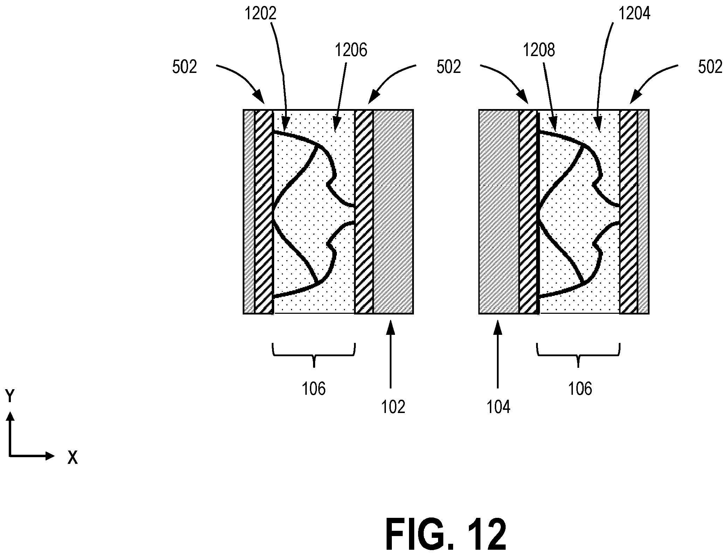

With reference to FIG. 12, a cross-section taken along line D shown in FIG. 11 is illustrated. In particular, each spring system 106 includes a constant force mechanism 1202, 1204, which consist of several interconnected curved struts connected to the backing structure 502. As shown, a portion of the backing structure 502 is disposed between the projections 102, 104 and the spring systems 106. However, in embodiments, the constant force mechanisms 1202, 1204 can also be directly connected, attached, or otherwise integrated into the corresponding projection 102, 104.

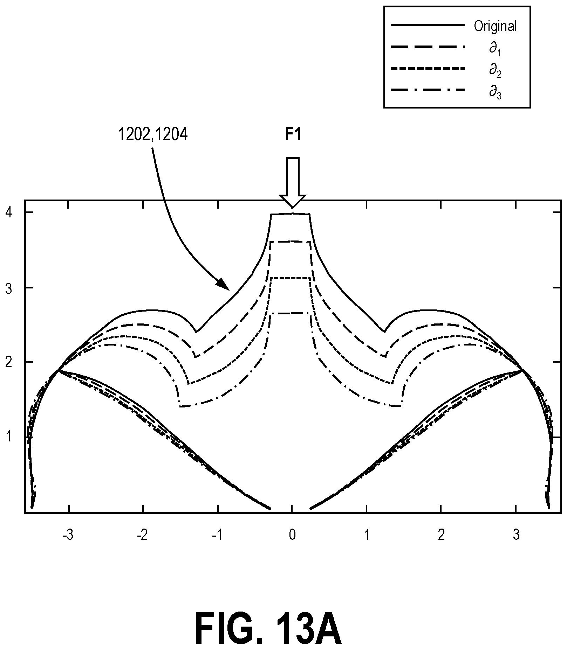

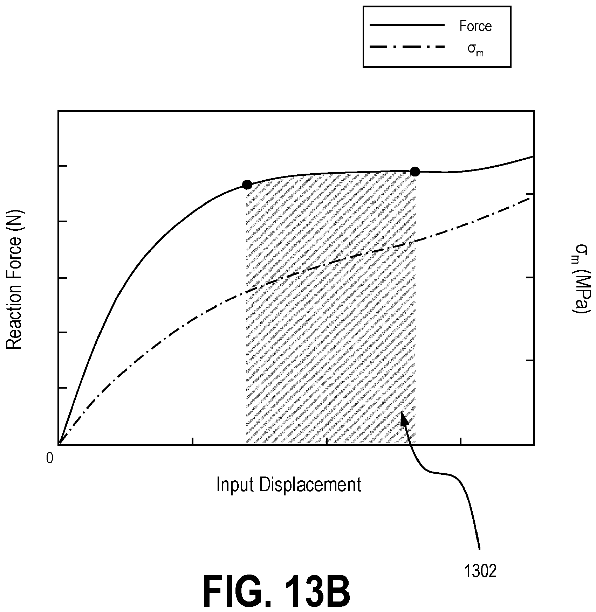

Each of the constant force mechanisms 1202, 1204 can be configured such that they each provide a constant or nearly-constant force within a desirable operational range. In an aspect, the operational range may be defined in terms of displacement of the mechanism 1202, 1204 and/or a component thereof. For example, FIG. 13A illustrates the displacement ($\partial$) of the constant force mechanisms 1202, 1204. As shown, when a force F1 is applied to the constant force mechanisms 1202, 1204, the constant force mechanisms 1202, 1204 undergo elastic deformation. The x- and y-axes shown in FIG. 12A represent displacement / distance and illustrate how the constant force mechanisms 1202, 1204 may deform under the force F1. With reference to FIG. 13B, illustrated is a generalized plot of the reaction force generated by the constant force mechanisms 1202, 1204 as a function of the input displacement. As shown, within an operational range 1302, the constant force mechanisms 1202, 1204 can be configured to provide a constant and/or nearly-constant force.

In embodiments, the design of the constant force mechanisms 1202, 1204 may be configured such that the operational range 1302 is suitable for the toothbrushing blocks 500 and the oral care devices 514. In an aspect, the operational range 1302 for each constant force mechanisms 1202, 1204 may be from about 1 mm to about 20 mm, including from about 1 mm to about 10 mm, from about 1 mm to about 5 mm, and from about 5 mm to about 10 mm.

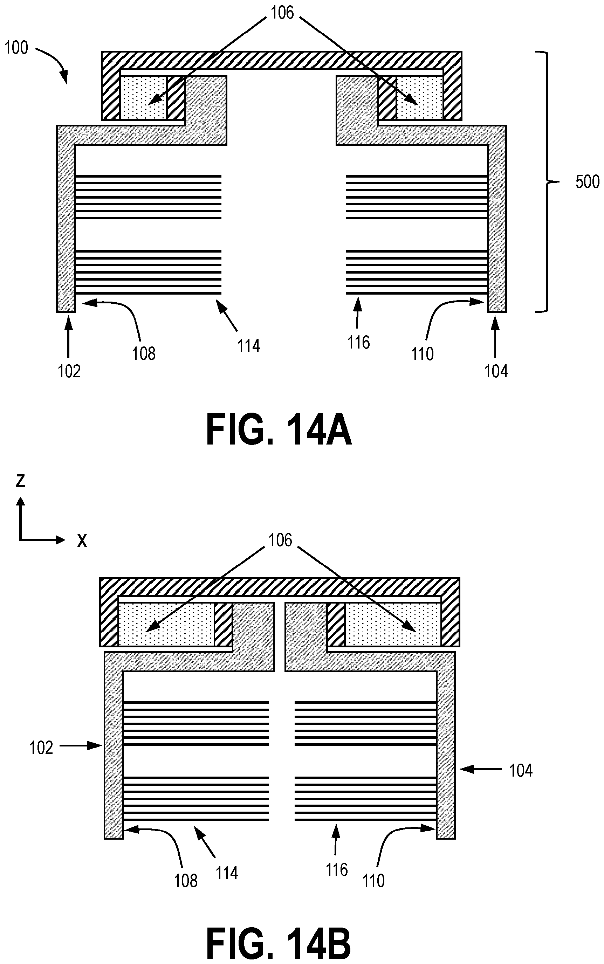

As such, with reference to FIGS. 14A and 14B, a force-controlled toothbrushing block 500 comprising a force-controlled mechanism 100 may be configured such that the spring systems 106 enable a unidirectional (e.g., x-axis direction) translation of the projections 102, 104. More specifically, the spring systems 106 of such blocks 500 may expand (as shown in FIG. 14B) or contract (as shown in FIG. 14A) with a constant / nearly-constant force, such as the force created when the cleaning elements 114, 116 are displaced by a foreign object (e.g., one or more teeth 112). In an aspect, the non-rotational movement of the projections 102, 104 can be achieved without the use of a sliding joint or connection (e.g., connectors 508 shown in FIG. 5) while the flexible sealing covers 512 may or may not be present.

As described herein, the controlled-force mechanism 100 (and particularly the spring systems 106) of the present disclosure are generally configured to allow translation of the projections 102, 104 in the direction of the x-axis without angular rotation / tilt in the direction of the y-axis or z-axis. However, it should be appreciated that the toothbrushing blocks 500 and/or the mouthpieces 514 may also enable vertical translation of the projections 102, 104. In particular, the toothbrushing blocks 500 and/or the oral care devices 514 may allow vertical translation of the projections 102, 104 such that the sidewalls 108, 110 maintain their orientation relative to one another. In particular embodiments, for example, the toothbrushing blocks 500 of an oral care device 514 may include a connector (not shown) connecting the backing structure 502 of the blocks 500 to the mouthpiece body 514, wherein the connector allows for extension and contraction of the block 500 in the direction of the z-axis without enabling the angular rotation or tilt of the projections 102, 104 relative to one another.

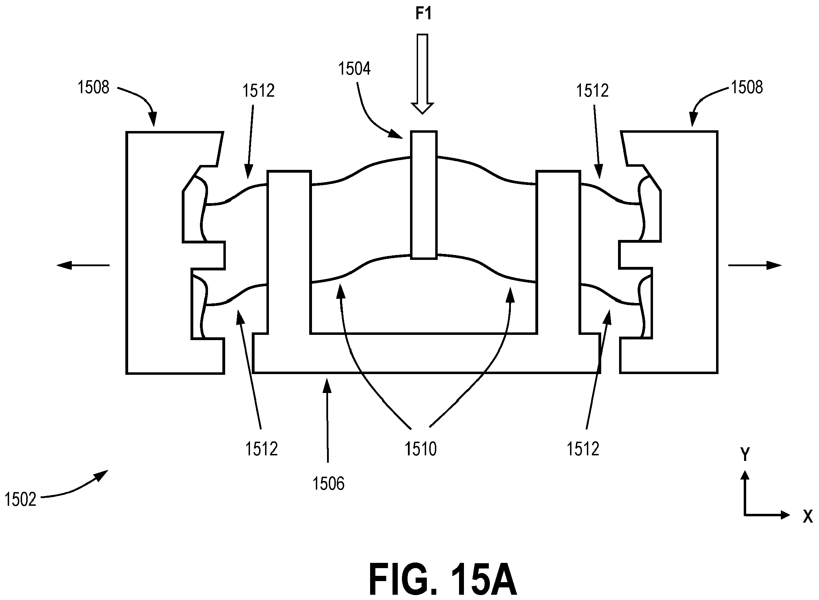

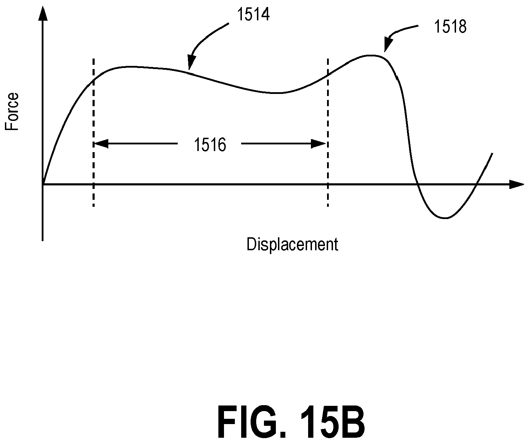

Turning to FIGS. 15A and 15B, another constant-force mechanism 1502 for use in a spring system 106 of a controlled-force block 500 is illustrated. According to the present disclosure, the constant-force mechanism 1502 may be a bistable mechanism comprising one or more inelastic members 1504, 1506, 1508 connected together with several interconnected curved struts 1510, 1512. When a force, such as force F1, is applied to a portion of the constant-force mechanism 1502, such as inelastic member 1504, the curved struts 1510, 1502 undergo elastic deformation such that the inelastic members 1506, 1508 extend outwards in the direction of the x-axis. In particular, elastic structs 1510, 1512 may be connected (e.g., through inelastic member 1506).

In an aspect, the constant-force mechanism 1502 can protect the toothbrushing block 500 and/or the oral care device 514 again mechanical shock or sudden overloading. For example, as shown in FIG. 15B, the constant-force mechanism 1502 can provide a constant or nearly-constant force 1514 over a target operational range 1516, but if or when the force 1514 reaches a threshold 1518 that forces displacement of the spring system 106 beyond the target operational range 1516, the force 1514 drops down to zero.

In an aspect, the constant-force mechanism 1502 may be formed from a polymer composition, a metal, and/or a metal alloy by molding, rapid prototyping, three-dimensional printing, and the like.

In embodiments, the constant-force mechanism 1502 or a portion thereof may be integrated into or otherwise attached to the backing structure 502 of the block 500 and/or the mouthpiece body 516. For example, one or more of the inelastic members 1504, 1506, 1508 may be attached to or otherwise form part of the force-controlled clamping mechanism 100, the backing structure 502, and/or device body 516. In particular, one of the inelastic member 1508 of each mechanism 1502 may be attached or otherwise integrated into a projection 102, 104 while the other inelastic member 1508 may be attached or otherwise integrated into the backing structure 502 and/or device body 516.

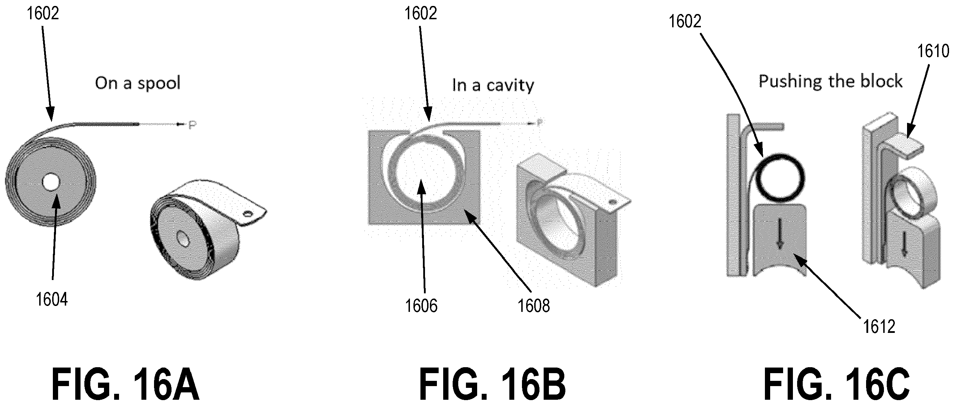

Turning to FIGS. 16A, 16B, and 16C, another constant-force mechanism 1602 for use in a spring system 106 of a controlled-force block 500 is illustrated. As shown, the constant-force mechanism 1602 may be a constant-force coil spring. In embodiments, the constant-force mechanism 1602 may be disposed on a spool 1614 that may freely rotate, as shown in FIG. 16A. In embodiments, the constant-force mechanism 1602 may be disposed within a cavity 1606 of a holding member 1608, as shown in FIG. 16B. In embodiments, the constant-force mechanism 1602 may be attached to a nonmoving member 1610 and used to push on the back of a movable member 1610.

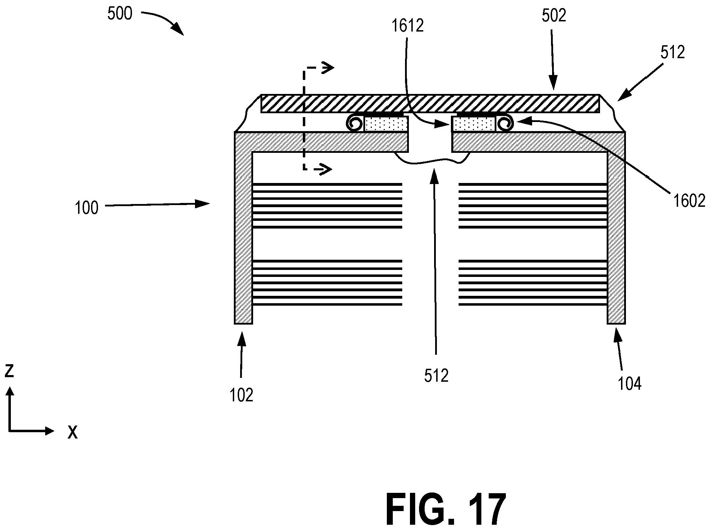

For example, with reference to FIG. 17, a coil spring-type constant force mechanism 1602 for use in a toothbrushing block 500 is illustrated according to aspects of the present disclosure. In particular, the toothbrushing block 500 includes a controlled-force mechanism 100 comprising a first and second projection 102, 104 and a backing structure 502 as described above. One or more components of the block 500 may be sealed using a sealing connector 512 (e.g., to prevent fluids and/or solids from building-up within the block 500). A constant-force mechanism 1602 may then be disposed between movable members 1612 and attached to the nonmoving backing structure 502. As such, when a force is generated due to the displacement of the cleaning elements 114, 116, the force will be translated through the moving members 1612 to the constant-force mechanism 1602, thereby allowing anon-rotational movement of the projections 102, 104.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein. It should also be appreciated that terminology explicitly employed herein that also may appear in any disclosure incorporated by reference should be accorded a meaning most consistent with the particular concepts disclosed herein.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of' and "consisting essentially of' shall be closed or semi-closed transitional phrases, respectively.

It should also be understood that, unless clearly indicated to the contrary, in any methods claimed herein that include more than one step or act, the order of the steps or acts of the method is not necessarily limited to the order in which the steps or acts of the method are recited.

Other implementations are within the scope of the following claims and other claims to which the applicant can be entitled.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

**Claims**

1. A force-controlled clamping mechanism (100) for an oral care device, comprising:

   a first projection (102) having a first set of cleaning elements (114) attached to a sidewall (108) of the first projection (102);
   a second projection (104) having a second set of cleaning elements (116) attached to a sidewall (110) of the second projection (104), wherein the sidewall of the first projection (102) opposes the sidewall of the second projection (104) such that the first set of cleaning elements (114) extend from the sidewall (108) of the first projection (102) towards the sidewall (110) of the second projection (104) and the second set of cleaning elements (116) extend from the sidewall (110) of the second projection (104) towards the sidewall (108) of the first projection (102); and
   a spring system (106) connected to the first projection (102) and the second projection (104), the spring system (106) being configured to enable the sidewall (108) of the first projection (102) and the sidewall (110) of the second projection (104) to move towards and/or away from one another.

2. The force-controlled clamping mechanism (100) of claim 1, wherein the force-controlled clamping mechanism (100) is configured to receive a foreign object (112) between the sidewall of the first projection (102) and the sidewall of the second projection (104) such that the first and second sets of cleaning elements contact the foreign object (112).

3. The force-controlled clamping mechanism (100) of claim 2, wherein receiving the foreign object (112) between the first and second projections (102, 104) causes a displacement of the first and second set of cleaning elements.

4. The force-controlled clamping mechanism (100) of claim 3, wherein the displacement of the first and second set of cleaning elements creates a force on the spring system (106) such that the first and second projections (102, 104) move towards and/or away from one another.

5. The force-controlled clamping mechanism (100) of claim 1, wherein the sidewall of the first projection (102) and the sidewall of the second projection (104) are substantially parallel.

6. The force-controlled clamping mechanism (100) of claim 5, wherein the spring system (106) is configured to enable the sidewall of the first projection (102) and the sidewall of the second projection (104) to move towards and/or away from one another while the sidewall of the first projection (102) remains substantially parallel with the sidewall of the second projection (104).

7. The force-controlled clamping mechanism (100) of claim 1, wherein the force-controlled clamping mechanism (100) has a clamping value (C) of between 30% and 70%, where $C = \left( BL - \frac{w - T_w}{2} \right) * \frac{1}{BL}$, $BL$ is the length of the first and second set of cleaning elements, w is the distance between the sidewall of the first projection (102) and the sidewall of the second projection (104), and $T_w$ is the thickness of the foreign object (112).

8. The force-controlled clamping mechanism (100) of claim 1, wherein the spring system (106) comprises one or more elastic constant-force mechanisms (1202, 1204, 1502).

9. The force-controlled clamping mechanism (100) of claim 8, wherein the elastic constant-force mechanisms (1202, 1204) are also bistable mechanisms (1502).

10. The force-controlled clamping mechanism (100) of claim 1, wherein the spring system (106) comprises one or more constant-force coil springs (1602).

11. A force-controlled toothbrushing block (500), comprising:

    a block backing structure (502) and a force-controlled clamping mechanism (100) operatively connected to the backing structure;
    wherein the force-controlled clamping mechanism (100) includes:

    a first projection (102) having a first set of cleaning elements attached to a sidewall of the first projection (102);

a second projection (104) having a second set of cleaning elements attached to a sidewall of the second projection (104), wherein the sidewall of the first projection (102) opposes the sidewall of the second projection (104) such that the first set of cleaning elements extend from the sidewall of the first projection (102) towards the sidewall of the second projection (104) and the second set of cleaning elements extend from the sidewall of the second projection (104) towards the sidewall of the first projection (102);

a spring system (106) connecting the first projection (102) and the second projection (104) to the block backing structure, the spring system (106) being configured to enable the sidewall of the first projection (102) and the sidewall of the second projection (104) to move towards and/or away from one another.

12. The force-controlled toothbrushing block (500) of claim 11, wherein the force-controlled toothbrushing block is configured to receive one or more teeth (112) between the sidewall of the first projection (102) and the sidewall of the second projection (104) such that the first and second sets of cleaning elements contact the one or more teeth (112),

wherein receiving the one or more teeth (112) causes a displacement of the first and second sets of cleaning elements such that a force is applied to the spring system (106) causing the sidewall of the first projection (102) and the sidewall of the second projection (104) to move towards and/or away from one another, and

wherein the sidewall of the first projection (102) and the sidewall of the second projection (104) remain substantially parallel.

13. An oral care device (514), comprising:

at least one force-controlled toothbrushing block (500) secured to a flexible mouthpiece body (516), the flexible mouthpiece body (516) being configured to receive at least a region of a subject's set of teeth (112) when the flexible mouthpiece body is inserted into the subject's mouth;

wherein each force-controlled toothbrushing block (500) includes:

a first projection (102) having a first set of cleaning elements attached to a sidewall of the first projection (102);

a second projection (104) having a second set of cleaning elements attached to a sidewall of the second projection (104), wherein the sidewall of the first projection (102) opposes the sidewall of the second projection (104) such that the first set of cleaning elements extend from the sidewall of the first projection (102) towards the sidewall of the second projection (104) and the second set of cleaning elements extend from the sidewall of the second projection (104) towards the sidewall of the first projection (102);

a block backing structure; and

a spring system (106) connecting the first projection (102) and the second projection (104) to the block backing structure, the spring system (106) being configured to enable the sidewall of the first projection (102) and the sidewall of the second projection (104) to move towards and/or away from one another.

14. The oral care device (514) of claim 13, wherein the oral care device (514) includes two or more force-controlled toothbrushing blocks (500) that are secured to the flexible mouthpiece body (516).

15. The oral care device (514) of claim 13, wherein each force-controlled toothbrushing block (500) is configured to receive one or more teeth (112) between the sidewall of the first projection (102) and the sidewall of the second projection (104) such that the first and second sets of cleaning elements contact the one or more teeth (112), the one or more teeth (112) being from the region of a subject's set of teeth (112) received by the flexible mouthpiece body, and

for each force-controlled toothbrushing block:

receiving the one or more teeth (112) from the region of a subject's set of teeth (112) causes a displacement of the first and second sets of cleaning elements such that a force is applied to the spring system (106) causing the sidewall of the first projection (102) and the sidewall of the second projection (104) to move towards and/or away from one another, and

the sidewall of the first projection (102) and the sidewall of the second projection (104) remain substantially parallel.

FIG. 1

**FIG. 2**

**FIG. 3**

**FIG. 4**

**FIG. 5**

EP 4 299 034 A1

FIG. 6

**FIG. 7**

**FIG. 8**

**FIG. 9**

**FIG. 10**

**FIG. 11**

EP 4 299 034 A1

EP 4 299 034 A1

**FIG. 12**

**FIG. 13A**

FIG. 13B

FIG. 14A

FIG. 14B

EP 4 299 034 A1

**FIG. 15A**

**FIG. 15B**

EP 4 299 034 A1

FIG. 16A

FIG. 16B

FIG. 16C

**FIG. 17**

EP 4 299 034 A1

Europäisches
Patentamt
European
Patent Office
Office européen
des brevets

## EUROPEAN SEARCH REPORT

Application Number

EP 22 19 8459

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 645 988 B1 (MAURER ANDREAS [CH]) 13 January 1999 (1999-01-13) | 1-7,11, 12 | INV. A61C17/22 A61C17/34 |
| A | * column 1 - column 17; figures 1-13 * | 8-10, 13-15 | |
| X | EP 2 721 949 A1 (MINANO FERNANDEZ FERNANDO [ES]) 23 April 2014 (2014-04-23) | 1-6, 11-15 | |
| A | * paragraph [0001] - paragraph [0034]; figure 1a7b * | 8-10 | |
| X | US 2019/298051 A1 (GUENST LISA MICHELLE [US] ET AL) 3 October 2019 (2019-10-03) | 1-7,11, 12 | |
| A | * column 1 - column 69; figures 1-8 * | 8-10, 13-15 | |
| X | WO 2022/109345 A1 (RYCA INT INC [US]) 27 May 2022 (2022-05-27) | 1-7, 11-15 | |
| A | * paragraph [0003] - paragraph [0208]; figures 1-25C * | 8-10 | |

TECHNICAL FIELDS
SEARCHED (IPC)

A61C
A46B

The present search report has been drawn up for all claims

| Place of search | Date of completion of the search | Examiner |
|---|---|---|
| Munich | 9 May 2023 | Wirth, Christian |

EPO FORM 1503 03.82 (P04C01)

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
    ......................................................................
& : member of the same patent family, corresponding
document

## ANNEX TO THE EUROPEAN SEARCH REPORT
## ON EUROPEAN PATENT APPLICATION NO.

EP 22 19 8459

09-05-2023

| Patent document cited in search report | | | Publication date | Patent family member(s) | | | Publication date |
|---|---|---|---|---|---|---|---|
| EP | 0645988 | B1 | 13-01-1999 | AT | 175565 | T | 15-01-1999 |
| | | | | AU | 6281194 | A | 08-11-1994 |
| | | | | CN | 1105173 | A | 12-07-1995 |
| | | | | EP | 0645988 | A1 | 05-04-1995 |
| | | | | JP | H07507956 | A | 07-09-1995 |
| | | | | US | 5876206 | A | 02-03-1999 |
| | | | | WO | 9423667 | A1 | 27-10-1994 |
| EP | 2721949 | A1 | 23-04-2014 | EP | 2721949 | A1 | 23-04-2014 |
| | | | | ES | 2379170 | A1 | 23-04-2012 |
| | | | | JP | 6128464 | B2 | 17-05-2017 |
| | | | | JP | 2014516736 | A | 17-07-2014 |
| | | | | US | 2014123421 | A1 | 08-05-2014 |
| | | | | WO | 2012172149 | A1 | 20-12-2012 |
| US | 2019298051 | A1 | 03-10-2019 | NONE | | | |
| WO | 2022109345 | A1 | 27-05-2022 | WO | 2022109278 | A1 | 27-05-2022 |
| | | | | WO | 2022109342 | A1 | 27-05-2022 |
| | | | | WO | 2022109345 | A1 | 27-05-2022 |

EPO FORM P0459